# EUROPÄISCHE PATENTANMELDUNG

(11) **EP 0 826 783 A2**
(43) Veröffentlichungstag der Anmeldung: **04.03.1998**
(21) Anmeldenummer: 97114345.8
(22) Anmeldetag: 20.08.1997
(51) Int. Cl.: C21D 9/00, C21D 1/06, F16H 53/00

(54) **Kurvenscheibe und Verfahren zu deren Herstellung**

(30) Priorität: 26.08.1996 DE 19634402
(71) Anmelder: KOENIG & BAUER-ALBERT AKTIENGESELLSCHAFT, 97080 Würzburg (DE)
(72) Erfinder: Dauner, Bertram Wilhelm-Georg, 97084 Würzburg (DE)

(57) **Zusammenfassung**

Eine Kurvenscheibe (1) wird mit einer in einem infolge eines Härtefahrens bedingten, ungehärteten Bereich angeordneter Aussparung (6) versehen, in die ein gehärtetes Einsatzstück (7) eingesetzt wird, um eine funktional umlaufende, gehärtete Arbeitsfläche (2) zu erhalten.

## Beschreibung

Die Erfindung betrifft eine Kurvenscheibe und ein Verfahren zu deren Herstellung gemäß dem Oberbegriff der Ansprüche 1, 2 und 8.

Für Kurvenscheiben eines Kurvengetriebes mit umlaufenden Kurvenrollen werden häufig Kurvenscheiben mit einer rundum laufenden, gehärteten Lauffläche verwendet. Bei kleinen Kurvenscheiben ist das Harten dieser Laufflächen relativ unproblematisch, da die ganze Scheibe beispielsweise in einem Ofen gehärtet wird. Müssen jedoch große Kurvenscheiben gehärtet werden, kommen Härteverfahren zum Einsatz, bei denen die Lauffläche nur partiell, z. B. mittels einer Flamme, erwärmt wird und anschließend mittels einer Wasserbrause abgeschreckt wird. Dabei werden die Flamme und die zu härtende Lauffläche relativ zueinander bewegt. Eine Maschine mit einer Heizeinrichtung und einer Wasserbrause zur Durchführung eines derartigen Härteverfahrens ist beispielsweise in der DE-OS 26 49 391 beschrieben. Da es dabei im Start- und Endbereich zu Problemen infolge erneuter Erwärmung des bereits gehärteten Startbereiches (z. B. Rißbildung) kommen kann, wird üblicherweise ein Abstand zwischen Start- und Endbereich eingehalten.
Dieser Bereich bleibt ungehärtet.
Nachteilig ist hierbei, daß in diesem verfahrensbedingten, ungehärteten Bereich der endlosen Lauffläche Verschleiß auftreten kann.

Der Erfindung liegt die Aufgabe zugrunde, eine Kurvenscheibe und ein Verfahren zu deren Herstellung zu schaffen.

Diese Aufgabe wird durch die Merkmale des kennzeichnenden Teiles der Ansprüche 1, 2 und 8 gelöst.

Die mit der Erfindung erzielbaren Vorteile bestehen insbesondere darin, daß auch bei einer großen Kurvenscheibe eine rundum laufende, randschichtgehärtete Lauffläche mit einem partiell erwärmenden Härteverfahren erreicht werden kann. Hierzu sind keine aufwendigen, großdimensionierte Vorrichtungen zum Härten, wie z. B. große öfen notwendig. Diese Kurvenscheibe ist beispielsweise als Teil eines Kurvengetriebes mit umlaufenden Kurvenrollen ausgebildet.
Wird ein Einsatzstück wie in einer Ausbildung der Erfindung in einem verschleißgefärdeten Bereich, z. B. einem Bereich größter Belastung, angeordnet, ist diese Einsatzstück einfach austauschbar, ohne die gesamte Kurvenscheibe auswechseln zu müssen.

Die erfindungsgemäße Kurvenscheibe ist in der Zeichnung dargestellt und wird im folgenden näher beschrieben.

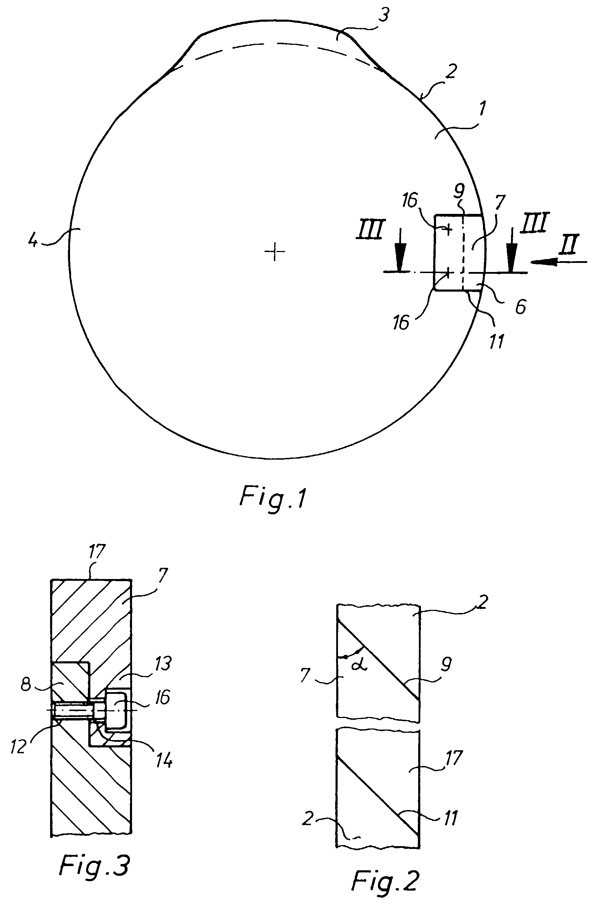

Es zeigen
- Fig. 1: eine schematische Seitenansicht einer Kurvenscheibe;
- Fig. 2: eine schematische Draufsicht eines Ausschnittes einer Arbeitsfläche der Kurvenscheibe;
- Fig. 3: einen schematischen Schnitt durch die Kurvenscheibe im Bereich eines Einsatzstückes;
- Fig. 4: ein schematischer Schnitt einer Aussparung mit Überbrückungsstück;
- Fig. 5: einen schematischen Schnitt durch die Kurvenscheibe im ungehärteten Bereich mit einem Überbrückungsstück.

Eine Kurvenscheibe 1 eines Kurvengetriebes weist eine rundum laufende Arbeitsfläche 2, d.h. eine sich über 360° erstreckende Arbeitsfläche 2, auf. Mit dieser Kurvenscheibe 1 des Kurvengetriebes wirkt beispielsweise eine Kurvenrolle zusammen, die auf der Arbeitsfläche 2, d.h. der Lauffläche oder Steuerfläche, der Kurvenscheibe 1 abrollt. Dieses Kurvengetriebe ist z. B. Teil eines Falzapparates einer Rollenrotationsdruckmaschine um Punkturen, Falzklappen oder Falzmesser anzusteuern. Im vorliegenden Ausführungsbeispiel ist als Arbeitsfläche 2 eine Mantelfläche der Kurvenscheibe 1 vorgesehen.
Die Kurvenscheibe 1 ist beispielsweise im wesentlichen kreisförmig ausgebildet und weist in einem Bereich eine als Nocken 3 wirkende Erhebung auf. Selbstverständlich können auch mehrere Nocken oder Vertiefungen angeordnet sein. Auch sind andere, beliebige Formen der Kurvenscheibe 1 möglich. Die Arbeitsfläche 2 kann auch beispielsweise an einer Stirnseite 4 der Kurvenscheibe 1 angebracht sein.
Die Arbeitsfläche 2, d.h. die Mantelfläche der Kurvenscheibe 1 ist rundum laufend ausgebildet. Diese aus Stahl bestehende Arbeitsfläche 2 wird gehärtet, beispielsweise randschichtgehärtet, um Verschleiß zu minimieren. Die Arbeitsfläche 2 der Kurvenscheibe 1 wird auf Austenitisierungstemperatur erhitzt und anschließend mit Wasser abgeschreckt. Dabei wird die Härtung durch Martensitbildung erreicht. Die Erwärmung kann beispielsweise mittels einer Flamme oder Induktionsspulen erfolgen.
Während bei kleineren Werkstücken, beispielsweise Kurvenscheiben 1, die Erwärmung des gesamten Werkstückes beispielsweise in einem Ofen erfolgt, wird besonders bei großen Werkstücken beispielsweise eine Flamme mit anschließender Wasserbrause verwendet, wobei Flamme mit Wasserbrause und Werkstück relativ zueinander bewegt werden. Somit wird die zu härtende Arbeitsfläche 2 nur partiell erwärmt. Wird nun beispielsweise Flamme und Wasserbrause von einem Startpunkt aus entlang der Arbeitsfläche bewegt, wird eine sukzessive Martensitbildung entsprechend dem Verlauf der Flamme erreicht. Bei einer rundum laufenden Arbeitsfläche 2 gelangt die Flamme nach nahezu vollständig abgeschlossenen Bewegungsablauf an ihren Startpunkt zurück. Dort liegt allerdings schon Martensitgefüge vor, das durch die Flamme erneut erwärmt wird. Dabei kann es zu Gefügeveränderungen, Rissen oder anderen Schäden kommen. Um dies zu vermeiden, sind üblicherweise Start- und Endpunkt auch bei einer rundum laufenden Arbeitsfläche 2 nicht identisch, sondern die Erwärmung wird bereits beendet bevor der Startpunkt wieder erreicht wird. Dadurch bleibt ein Bereich der Arbeitsfläche 2 ungehärtet. In diesem ungehärteten Bereich entstehen aber im Betrieb häufig Schäden.

Um eine rundum laufende Arbeitsfläche 2 zu erhalten, weist die Kurvenscheibe 1 eine die Arbeitsfläche 2 unterbrechende Aussparung 6 auf, in die ein Einsatzstück 7 eingesetzt ist. Diese Aussparung 6 ist in radialer Richtung und in Umfangsrichtung annähernd rechteckig ausgebildet. An ihrem nach außen weisenden Ende durchdringt die Aussparung 6 die Kurvenscheibe 1 vollständig, während an ihren inneren Ende ein Absatz 8 angeordnet ist. Seitenflächen 9, 11 des äußeren Endes der Aussparung 6 sind um einen Winkel alpha, z. B. 45°, bezüglich der Stirnseite 4 der Kurvenscheibe 1 geneigt, so daß sich bei Draufsicht auf die Arbeitsfläche 2 der Kurvenscheibe 1 ein schräger Schnittverlauf ergibt.
Anstelle des "schrägen" Schnittverlaufes können Aussparung 6 und Einsatzstück 7 auch in Umfangsrichtung der Arbeitsfläche 2 mehrstufig ausgebildet sein.
In den als Anschraubfläche dienenden Absatz 8 des inneren Endes der Aussparung 6 sind beispielsweise zwei Gewindebohrungen 12 eingebracht.
Das Einsatzstück 7 ist auf die Aussparung 6 angepaßt und ist daher an seinem inneren Ende ebenfalls mit einem Absatz 7 versehen. In diesem Absatz 7 sind zwei Durchgangsbohrungen 14 angebracht durch die Gewindeschrauben 16 reichen, mit denen das Einsatzstück 7 In der Aussparung 6 der Kurvenscheibe 1 angeschraubt ist. Eine äußeres Ende des Einsatzstückes 7 ist mit einer Arbeitsfläche 17 versehen, die auf den Kurvenverlauf der Arbeitsfläche 2 der Kurvenscheibe 1 angepaßt ist.

Die Arbeitsfläche 2 der Kurvenscheibe 1 wird mittels der bereits beschriebenen Verfahren gehärtet. Dabei bestimmen Startpunkt und Endpunkt der Erwärmung, d.h. eine Länge des ungehärteten Bereiches der Arbeitsfläche 2 eine Größe der Aussparung 6 (Länge der Aussparung ist größer als eine Länge des ungehärteten Bereiches). Die Aussparung 6 kann vor oder nach dem Härten in die Kurvenscheibe eingebracht werden. Die nur durch die Aussparung 6 unterbrochene Arbeitsfläche 2 wird vollständig ohne die beschriebenen Probleme gehärtet.
Die Arbeitsfläche 17 des Einsatzstückes 7 wird unabhängig von der Kurvenscheibe 1 gehärtet.
Das Einsatzstück 7 wird nun in der Aussparung 6 befestigt und gegebenenfalls wird die nun rundum laufende Arbeitsfläche 2; 17, d.h. die Arbeitsfläche 2 der Kurvenscheibe 1 und die Arbeitsfläche 17 des Einsatzstückes 7 nochmals gemeinsam bearbeitet, z. B. Überschliffen.

Beispielsweise wird folgendes Verfahren zur Herstellung der Kurvenscheibe 1 verwendet:
Die Arbeitsfläche 2 der Kurvenscheibe 1 wird von einem Startpunkt ausgehend bis zu einem Endpunkt mittels eines partiell wirkenden Härteverfahrens randschichtgehärtet, wobei Start- und Endpunkt beabstandet sind. In die Kurvenscheibe 1 mit der rundum laufenden Arbeitsfläche 2 wird vor oder nach dem Härten die Aussparung 6 in den ungehärteten Bereich zwischen Start- und Endpunkt eingebracht, so daß eine Länge der Aussparung 6 in Umfangsrichtung der Arbeitsfläche 2 größer ist als eine Länge des ungehärteten Bereiches infolge des partiell wirkenden Härteverfahrens. In diese Aussparung 6 wird das Einsatzstück 7 mit seiner gehärteten Arbeitsfläche 17 eingesetzt.

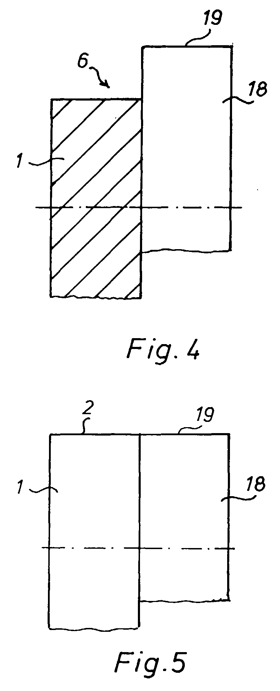

Auch ist es möglich, ein überbrückungsstück 18 neben die Aussparung 6 und diese überbrückend zu befestigen (Fig. 4).

Somit wurde die Kurvenscheibe 1 mit einer funktional umlaufenden, gehärteten Arbeitsfläche 2, 17 versehen.

Ebenso ist es möglich, die Kurvenscheibe 1 nicht mit einer Aussparung 6 zu versehen, sondern neben dem ungehärteten Bereich ein Überbrückungsstück 18 mit einer gehärteten Arbeitsfläche 19 zu befestigen und diesen zu überbrücken (Fig. 5). Somit ist die Kurvenscheibe 1 mit einer funktional endlos, gehärteten Arbeitsfläche 2, 19 versehen.

Unter dem Ausdruck "funktional" umlaufend ist zu verstehen, daß beispielsweise eine auf der Arbeitsfläche 2, 17 abrollende Kurvenrolle unterbrechungslos entlang einem durch die Arbeitsfläche 2, 17 vorgegebenen Kurvenverlauf geführt wird.

Die Aussparung 6 und das Einsatzstück 7 können beispielsweise im Bereich höchster Belastung angeordnet sein. Somit ist in dieser verschleißgefährdeten Zone im Schadensfall eine leichte Austauschbarkeit gewährleistet.
Es ist aber möglich die Aussparung 6 und das Einsatzstück 7 im Bereich niedrigster Belastung anzuordnen.

### Bezugszeichenliste

- 1: Maschinenelement; Kurvenscheibe
- 2: Arbeitsfläche
- 3: Nocken
- 4: Stirnseite (1)
- 5: -
- 6: Aussparung (1)
- 7: Einsatzstück
- 8: Absatz
- 9: Seitenfläche (6)
- 10: -
- 11: Seitenfläche (6)
- 12: Gewindebohrung
- 13: Absatz
- 14: Durchgangsbohrung
- 15: -
- 16: Gewindeschrauben
- 17: Arbeitsfläche (7)
- 18: Überbrückungsstück
- 19: Arbeitsfläche (18)

- Alpha: Winkel

## Patentansprüche

1. Verfahren zur Herstellung einer Kurvenscheibe (1): Deren Arbeitsfläche (2) wird mittels eines partiell wirkenden Härteverfahrens randschichtgehärtet, zwischen Startpunkt und Endpunkt dieses Härtevorganges wird ein Abstand eingehalten, ein Bereich zwischen Start- und Endpunkt bleibt ungehärtet, dieser ungehärtete Bereich wird vor oder nach dem Härten in Umfangsrichtung und radialer Richtung entfernt und so eine Aussparung (6) gebildet, in diese Aussparung (6) wird ein die Arbeitsfläche (2) funktional schließendes Einsatzstück (7) mit einer gehärteten Arbeitsfläche (17) eingesetzt oder ein Überbrückungsstück wird neben der Aussparung (6) und diese überbrückend befestigt.

2. Kurvenscheibe (1) mit einer randschichtgehärteten Arbeitsfläche (2), diese Arbeitsfläche (2) ist zumindest über eine Länge eines infolge eines partiell härtenden Verfahrens ungehärteten Bereiches durch eine Aussparung (6) unterbrochen und ist mittels eines in dieser Aussparung (6) angeordneten, eine gehärtete Arbeitsfläche (17) aufweisenden Einsatzstückes (7) oder mittels eines neben der Aussparung (6) angeordneten und diese überbrückenden Überbrückungsstückes funktional geschlossen.

3. Kurvenscheibe (1) nach Anspruch 2, dadurch gekennzeichnet, daß das Einsatzstück (7) in einer Aussparung (6) der Arbeitsfläche (2) der Kurvenscheibe (1) angeordnet ist.

4. Kurvenscheibe (1) nach Anspruch 2, dadurch gekennzeichnet, daß das Einsatzstück (7) in einem Bereich größter, auf die Arbeitsfläche (2; 17) der Kurvenscheibe (1) wirkender Belastung angeordnet ist.

5. Kurvenscheibe (1) nach Anspruch 2, dadurch gekennzeichnet, daß das Einsatzstück (7) in einem Bereich kleinster, auf die Arbeitsfläche (2; 17) der Kurvenscheibe (1) wirkender Belastung angeordnet ist.

6. Kurvenscheibe (1) nach Anspruch 2, dadurch gekennzeichnet, daß Seitenflächen (9; 11) einer für das Einsatzstück (7) vorgesehen Aussparung (6) bezüglich der Umfangsrichtung der Arbeitsfläche (2) geneigt angeordnet sind, so daß sich ein "schräger" Schnittverlauf ergibt und daß das Einsatzstück (7) auf die derartig ausgebildete Aussparung (6) angepaßt ist.

7. Kurvenscheibe (1) nach Anspruch 2, dadurch gekennzeichnet, daß die Aussparung (6) in Umfangsrichtung der Arbeitsfläche (2) mehrstufig ausgebildet ist und daß das Einsatzstück (7) auf die derartig ausgebildete Aussparung (6) angepaßt ist.

8. Kurvenscheibe (1) mit einer randschichtgehärteten Arbeitsfläche (2), diese Arbeitsfläche (2) weist einen infolge eines partiell härtenden Verfahrens ungehärteten Bereich auf und ist mittels eines neben dem ungehärteten Bereich angeordneten und diesen überbrückenden Überbrückungsstückes (18) mit einer funktional endlos, gehärteten Arbeitsfläche (2; 19) versehen.
